# FASCICULE DE BREVET EUROPEEN

(11) **EP 3 320 390 B1**
(45) Date de publication et mention de la délivrance du brevet: **21.10.2020**
(21) Numéro de dépôt: 16734418.3
(22) Date de dépôt: 31.05.2016
(51) Int. Cl.: G02F 1/155, G02F 1/157, G02C 7/10, G02F 1/153

(54) **DISPOSITIF OPHTALMIQUE À CELLULE À VARIATION DE TRANSMISSION PERFECTIONNÉE**
OPHTHALMISCHE VORRICHTUNG MIT EINER VERBESSERTEN ZELLE VARIIERENDER DURCHLÄSSIGKEIT
OPHTHALMIC DEVICE WITH AN IMPROVED, TRANSMISSION VARYING CELL

(30) Priorité: 10.07.2015 FR 1556613
(43) Date de publication de la demande: 16.05.2018
(73) Titulaire: Essilor International, 94220 Charenton-le-Pont (FR)
(72) Inventeur: CANO, Jean-Paul, 94227 Charenton le Pont Cedex (FR); BALLET, Jérôme, 94227 Charenton le Pont Cedex (FR); ESCAICH, David, 94227 Charenton le Pont Cedex (FR); PERROT, Stéphane, 94227 Charenton le Pont Cedex (FR); BIVER, Claudine, 94227 Charenton le Pont Cedex (FR); BERIT DEBAT, Fabien, 94227 Charenton Le Pont Cedex (FR); ARCHAMBEAU, Samuel, 94227 Charenton le Pont Cedex (FR); VINSONNEAU, Sylvie, 94227 Charenton le Pont Cedex (FR)
(74) Mandataire: Plasseraud IP
(86) Numéro de dépôt international: PCT/FR2016/051295
(87) Numéro de publication internationale: WO 2017/009535

(56) Documents cités:
- EP-A1- 1 128 744
- FR-A1- 2 835 931
- JP-A- S5 726 822
- US-A- 4 547 049
- US-A- 5 478 824
- US-A1- 2003 052 838
- US-A1- 2009 262 411
- US-A1- 2013 278 989

## Description

La présente invention concerne un dispositif ophtalmique.

Elle concerne plus particulièrement un dispositif ophtalmique comprenant au moins une cellule à variation d'amplitude pilotable électriquement.

Il peut s'agir à titre d'exemple non limitatif d'une cellule de type électrochromique, reliée à un circuit de commande de variation d'amplitude, par exemple de transmission dans le spectre visible.

Des cellules notamment de ce type présentent des faces avant à courbure nulle (planes), ce qui entraîne tout ou partie des inconvénients suivants :
- un flux lumineux latéral (de faible incidence et venant sur les côtés de la cellule), perturbant le confort visuel du porteur du dispositif ophtalmique,
- un choix imposé de monture de cellule de même forme plane, inesthétique,
- une difficulté à respecter par ailleurs une prescription ophtalmique éventuelle du porteur,
- des performances de cellule (et de dispositif) sous-optimales, de façon générale. Des dispositifs électrochromiques ophtalmiques sont connus de l'art antérieur: US 2013/278989 A1, US 2009/262411 A1, EP 1 128 744 A1.

La présente invention vient améliorer cette situation.

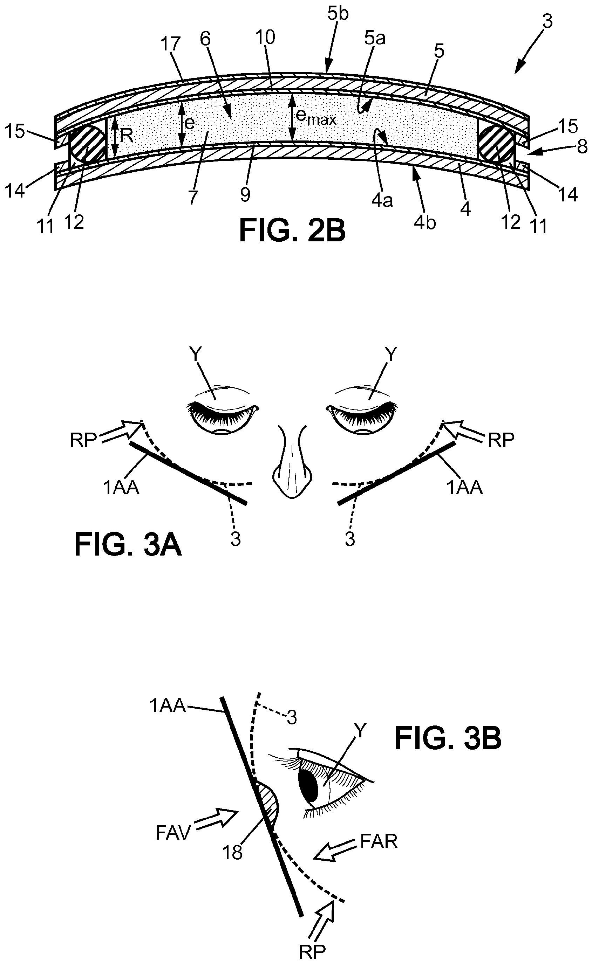

Elle propose à cet effet un dispositif ophtalmique comprenant une cellule à variation d'amplitude pilotable électriquement selon la revendication 1. En particulier, ladite cellule comporte au moins une couche transparente ayant une surface principale convexe en face avant. Cette disposition permet avantageusement d'augmenter le confort visuel du porteur, comme décrit plus loin en référence aux figures 3A et 3B.

La cellule comprend au moins une première couche transparente en face avant et une deuxième couche transparente en face arrière de sorte que les première et deuxième couches délimitent entre elles une cavité, la première couche en particulier a une surface principale, extérieure à la cavité, qui est convexe. Dans le cas d'une cellule à variation d'amplitude, cette disposition permet de faire traiter par la cellule un flux latéral RP comme illustré sur les figures 3A et 3B.

On peut prévoir alors des formes de couches transparentes courbes aussi à l'intérieur et de la cavité, pour optimiser notamment les propriétés de variation d'amplitude de la cavité. Par exemple, la cavité peut être d'espacement constant entre les première et deuxième couches. Cette disposition peut être assurée par exemple dans une gamme de tolérance allant jusqu'à trente pourcents près (30%).

Dans un exemple de réalisation, la cavité est fermée et remplie par une solution électrochrome, reliée à un circuit de traitement pour commander une amplitude optique de la cellule. Une telle disposition, notamment avec un espacement constant, permet d'obtenir une homogénéité d'amplitude dans la cellule.

Dans une réalisation, une face interne à la cavité de l'une au moins des couches transparentes est recouverte par un revêtement conducteur, réalisé en oxyde d'indium dopé à l'étain. Une telle disposition permet d'obtenir de bonnes performances, notamment de transmission de la cellule (à l'état clair en cas de cellule électrochrome à variation de transmission pilotable électriquement).

Dans une réalisation où la cellule est à variation de transmission pilotable électriquement, la cellule a une transmission dans le spectre visible :
- supérieure à 80% et préférentiellement supérieure à 85%, dans un premier état, et
- inférieure à 30% et préférentiellement inférieure à 18%, dans un deuxième état.

Bien entendu, il peut être prévu un ou plusieurs états intermédiaires avec des valeurs de transmission respectivement intermédiaires.

Ces dispositions apportent un confort visuel au porteur.

La cellule est reliée à un circuit de commande via un élément de connexion, cet élément de connexion est d'épaisseur inférieure à 5µm et de largeur inférieure à 1000µm. Une telle disposition permet d'obtenir de bonnes performances électriques de la cellule.

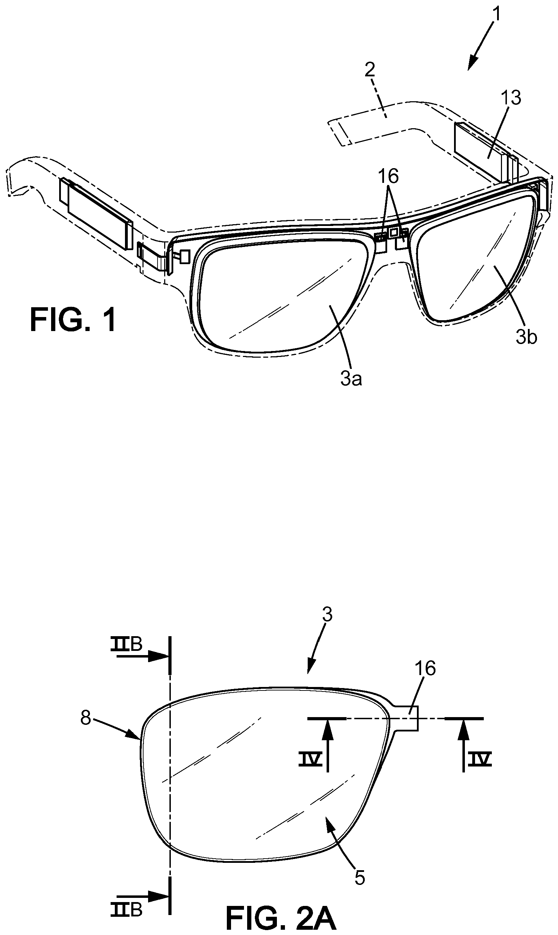

Le dispositif ophtalmique comporte en outre une monture comprenant au moins une ouverture logeant ladite cellule et présentant une courbure convexe en face avant, la surface principale convexe de ladite couche transparente a une courbure correspondant avantageusement à la courbure de la monture. Cette disposition permet avantageusement d'améliorer l'esthétique du dispositif, comme décrit plus loin en référence à la figure 1.

En outre, dans une réalisation, la cellule comporte au moins une couche transparente de courbure choisie pour conférer à la cellule une puissance optique respectant une prescription ophtalmique d'un porteur du dispositif. En effet, dès lors que la (ou les) couche(s) transparente(s) de la cellule peuvent avoir des surfaces courbes, cette disposition peut être avantageuse en outre pour respecter une éventuelle prescription du porteur. Cette disposition permet avantageusement d'améliorer le confort visuel du porteur.

Le dispositif ophtalmique comporte en outre au moins un insert transparent, accolé à une couche transparente de la cellule et ayant une puissance optique choisie pour respecter une prescription ophtalmique d'un porteur du dispositif.

D'autres caractéristiques et avantages de la présente invention apparaîtront dans la description détaillée suivante, se référant aux dessins annexés dans lesquels :
- La figure 1 est une vue en perspective d'un dispositif ophtalmique selon l'invention ;
- La figure 2A est une de face d'une cellule électrochrome de la figure 1 ;
- La figure 2B est une vue schématique en coupe selon le plan IIB-IIB de la figure 2A ;
- Les figures 3A et 3B comparent, respectivement de face et de profil, des performances optiques d'un dispositif au sens de l'invention, par rapport à un dispositif de l'art antérieur ;
- La figure 4 est une vue schématique en coupe selon le plan IV-IV de la figure 2A ;
- La figure 5 illustre les performances de transmission obtenues par une cellule d'un dispositif au sens de l'invention ;
- La figure 6 est un schéma possible pour la prise en compte de la prescription et du choix de monture d'un porteur, pour fournir un dispositif ophtalmique au sens de l'invention et tenant compte de ces paramètres ;
- La figure 7 illustre les principales étapes d'un procédé de prise en compte de la prescription et du choix de monture d'un porteur, pour fournir un dispositif ophtalmique au sens de l'invention.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

Par souci de clarté, seuls les éléments utiles à la compréhension des modes de réalisation décrits ont été représentés et seront détaillés.

La figure 1 représente un dispositif ophtalmique 1 selon l'invention.

Selon la réalisation représentée sur la figure 1, le dispositif ophtalmique 1 comprend une monture 2, comprenant deux logements respectifs dans lesquels sont montés deux cellules 3a et 3b. Dans l'exemple de réalisation décrit ici, il s'agit de cellules de type électrochrome, reliées à un circuit de commande de variation d'amplitude, par exemple de transmission dans le spectre visible. Dans une variante d'application, ces cellules peuvent être des verres informatifs, donc à amplitude variable (éventuellement localement), et pilotable électriquement. D'autres variantes d'application sont encore possibles, dans lesquelles interviennent des cellules à amplitude variable et pilotable électriquement. Par ailleurs, il est représenté sur la figure 1 une monture accueillant deux cellules, mais dans une variante possible la monture peut n'accueillir qu'une cellule et présenter à cet effet, par exemple, un pont large susceptible de loger une cellule unique qui s'étend sur toute la surface en regard des deux yeux du porteur.

Comme représentée sur les figures 2A et 2B, une cellule électrochrome 3 du dispositif 1 comprend deux couches transparentes 4, 5, avantageusement non conductrices, délimitant entre elles une cavité 6 destinée à être remplie par une composition électrochrome 7 dans l'exemple d'application décrit ici. Ainsi, chaque couche transparente 4, 5 comprend une face interne 4a, 5a et une face externe 4b, 5b. On désigne ainsi plus particulièrement par « interne » les faces 4a, 5a délimitant la cavité 6 de la cellule 3, et par « externe » les faces 4b, 5b extérieures à la cavité 6. La face interne 4a, 5a de chacune des couches transparentes 4, 5 est au moins partiellement, et de préférence complètement, recouverte par un revêtement électroconducteur 9, 10. Le revêtement électroconducteur 9, 10 peut par exemple être formé d'un matériau conducteur transparent organique ou minéral, par exemple un oxyde conducteur transparent (« transparent conductive oxide », TCO). De préférence, on utilise l'oxyde d'indium dopé à l'étain (« indium tin oxide », ITO). Avantageusement, un tel revêtement offre une résistance par carré inférieure à 15 omhs, préférentiellement inférieure à 10 ohms. Avec de telles performances, il est possible d'atteindre en outre une transmission particulièrement élevée de la cellule à l'état « clair » de la cellule (c'est-à-dire sans activer la solution électrochromique 7), avec un spectre de transmission dans le visible supérieur à 80%, et préférentiellement supérieur à 85%.

La cavité 6 a ainsi une épaisseur e comprise entre les deux faces internes 4a, 5a.

Les couches transparentes 4, 5 peuvent être des couches de verre organique ou minéral. Dans une réalisation, le matériau choisi pour chaque couche est un verre minéral éventuellement trempé. Les couches transparentes 4, 5 peuvent par exemple être des coques sphériques ou cylindriques, et ont notamment une forme sphéroïde, cylindroïde ou ovoïde délimitée par un bord périphérique 8.

Plus particulièrement, en référence aux figures 3A et 3B, les cellules à variation d'amplitude commandée électriquement, de l'art antérieur, ont des courbures nulles (planes) en face avant (références 1AA en trait plein). Il s'en suit qu'un flux lumineux RP, de faible incidence (sensiblement latéral), vient perturber le confort visuel du porteur (les yeux du porteur portant la référence Y sur ces figures 3A et 3B). Ainsi, les cellules de l'art antérieur ne sont pas capables d'apporter une protection suffisante contre l'éblouissement.

En revanche, une cellule 3 (représentée en traits pointillés) dont au moins une couche transparente présente une surface convexe en face avant (donc de courbure non nulle) permet de filtrer ce flux supplémentaire RP. Il peut s'agir par exemple d'un filtrage en transmission, pour une cellule électrochrome à transmission variable et pilotée électriquement.

Il est donc proposé ici que la cellule au sens de l'invention comporte au moins une couche transparente ayant une surface principale convexe en face avant (flèche portant la référence FAV de la figure 3B). On entend par « surface principale » la grande surface de la cellule 3 telle qu'elle apparait sur les figures 1 et 2A. La couche convexe en face avant est préférentiellement la couche de face avant, portant la référence 5 sur les figures 1 et 2A.

Par ailleurs, les cellules de l'art antérieur ne permettent pas de monter les verres sur toutes les formes de montures, ce qui limite le choix du porteur par rapport à des préférences esthétiques notamment. En particulier, il n'est pas possible de monter ces cellules sur des montures présentant des formes dont la courbure est non négligeable, ce qui représente la majorité des montures. Il faut alors fabriquer des montures de géométrie spécifique pour pouvoir accepter ce type de cellule. De plus, les courbures des couches de cellules de l'art antérieur sont nulles, ce qui génère en soi un effet peu esthétique.

Ainsi, l'invention permet de fournir à un porteur un dispositif ophtalmique avec une monture 2 et au moins une cellule 3, qui soit apte à satisfaire les besoins de confort et de performances visuelles du porteur, ainsi que ses besoins esthétiques.

Une application avantageuse possible consiste en ce que la cellule 3 soit de type électrochromique, c'est-à-dire à transmission variable à partir d'une réaction d'oxydoréduction, cette variation étant commandée électriquement. Une telle cellule, avec une courbure convexe en face avant, assure avantageusement une bonne protection contre l'éblouissement, tout en permettant un état clair quand nécessaire (par exemple dans des conditions de faible lumière).

Les couches transparentes 4, 5 utilisées pour réaliser une telle cellule électrochrome peuvent être des coques de verres de courbure externe non nulle, et plus particulièrement convexe en face avant externe (et par exemple concave en face arrière externe). La courbure de la face avant est préférentiellement identique ou proche de la courbure de la monture, et la gamme de courbure peut varier entre 0,25D (dioptries) et 11D. Il convient de noter que la face avant externe n'est pas forcément de courbure sphérique, mais peut être cylindrique ou autre, par exemple progressive et plus généralement asphérique, et donc de courbure localement variable. Elle reste néanmoins de forme générale convexe.

Comme présenté précédemment en référence aux figures 3A et 3B, l'utilisation d'une courbure non nulle permet alors de mieux protéger le porteur de l'éblouissement quand le verre est à l'état teinté, car la quantité de lumière pénétrant par les côtés est fortement limitée.

L'utilisation d'une courbure non nulle permet aussi d'adapter le verre électrochrome à des formes de montures (galbes) proches de ce qui peut être proposé pour des montures classiques, permettant ainsi d'offrir un choix large de montures suivant des critères esthétiques, ou des critères de protections à l'éblouissement (montures enveloppantes). Par exemple, une monture ayant une base (référence classique de courbure de monture) allant de 2 à 8 peut être utilisée. Les rayons de courbure des couches transparentes correspondant à cette gamme de courbure de monture peuvent être alors compris entre 60 mm et 300 mm

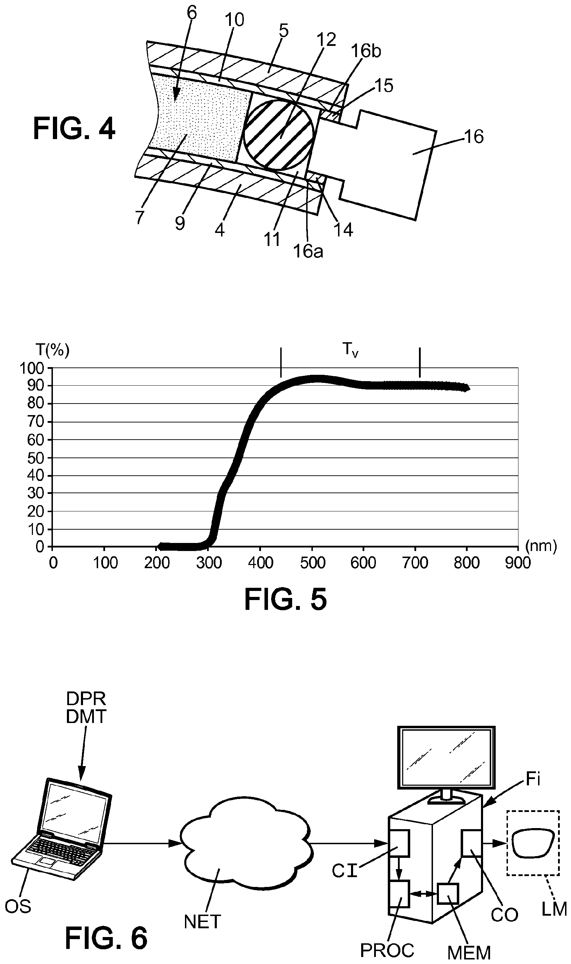

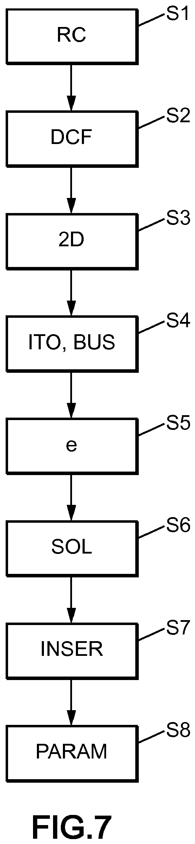

Un tel dispositif ophtalmique permet en outre de prendre en compte la prescription du porteur, comme on le verra plus loin en référence à un mode de réalisation présenté en figures 6 et 7.

Ainsi, les couches transparentes 4, 5 peuvent être avantageusement des lentilles ophtalmiques respectant, avec la composition électrochrome 7 de la cavité 6, une prescription ophtalmique d'un porteur du dispositif ophtalmique 1.

Par ailleurs, les faces internes 4a, 5a des couches transparentes 4, 5 peuvent être incurvées, c'est-à-dire qu'elles ont une courbure non nulle aussi à l'intérieur de la cavité. Par exemple, les faces internes 4a, 5a des couches transparentes 4, 5 peuvent être respectivement convexe et concave. En outre, la face externe 4b de la couche transparente 4 (en face arrière FAR) peut également être incurvée, et en particulier être concave.

La cellule 3, et notamment les deux couches transparentes 4, 5, sont maintenues entre elles par une colle et plus particulièrement un joint de scellement périphérique 11, permettant d'espacer les faces internes des couches. Dans l'exemple représenté sur les figures, le joint de scellement 11 entoure ainsi complètement la cavité 6. Le joint de scellement 11 permet d'assurer en particulier une épaisseur e suffisante de la cellule 3, ainsi qu'une absence de contact direct entre les revêtements électroconducteurs 9, 10 de chacune des couches transparentes 4, 5.

Le joint de scellement 11 a donc une hauteur h définissant l'épaisseur e de la cavité 6 à proximité des bords périphériques 8 des couches extérieures 4, 5. Cette hauteur h peut être comprise entre 40 micromètres et 200 micromètres, par exemple environ 100 micromètres. A cet effet, le joint 11 peut comporter un élément d'espacement 12 (ayant des dimensions de l'ordre de la hauteur h) et noyé dans un matériau adhésif.

Bien entendu, on désigne par « largeur », la taille d'un élément s'étendant dans un plan sensiblement parallèle aux faces internes 4a, 5a des couches transparentes 4, 5. On désigne par « hauteur » ou « épaisseur », la taille d'un élément selon une direction sensiblement transversale aux faces internes 4a, 5a des couches transparentes 4, 5.

Les revêtements électroconducteurs 9, 10 de chacune des couches transparentes 4, 5 forment des électrodes qui ne sont pas contact direct l'une avec l'autre et sont destinés à être connectés électriquement à une source électrique, telle qu'une batterie 13 (figure 1).

A cet effet, un élément de connexion 14, 15 (également appelé « bus »), notamment métallique (en cuivre ou en or par exemple), est disposé en périphérie de chacune des couches transparente 4, 5, en contact direct avec chaque revêtement conducteur 9, 10. Chacun des éléments de connexion 14, 15 entoure partiellement, ou complètement, chaque couche transparente 4, 5 au niveau de son bord périphérique 8. Chacun des éléments de connexion 14, 15 est notamment disposé au niveau du bord périphérique 8 de chacune des couches transparente 4, 5, et génère en particulier un équipotentiel autour de chacune des couches transparente 4, 5 qui permet d'obtenir une transmission uniforme sur la surface du verre.

Chacun des éléments de connexion est 14, 15 est disposé à l'extérieur de la cavité 6 formée par la cellule 3, et n'est donc pas en contact avec la composition électrochrome 7 remplissant la cavité 6. Le joint de scellement 11 peut donc être disposé entre la cavité 6 et chacun des éléments de connexion 14, 15. Autrement dit, la circonférence du joint de scellement 11 est inférieure à la circonférence de chaque élément de connexion 14, 15. Chacun des éléments de connexion 14, 15 est ainsi isolé, notamment électriquement, de la composition électrochrome 7, ceci afin d'éviter tout disfonctionnement local de la cellule 3, et en particulier afin d'éviter une réaction chimique destructrice du contact de la solution avec les éléments de connexion 14,15.

En particulier, le joint de scellement permet dans cet exemple de maintenir un écart e entre les couches 4 et 5, défini comme suit. En termes plus génériques, la couche 5 en face avant (appelée ci-avant « première couche de la cellule ») comporte une surface principale 5a, intérieure à la cavité 6, qui est concave. La couche 4 en face arrière (appelée ci-avant « deuxième couche ») comporte une surface principale, intérieure à la cavité, qui est convexe. Plus particulièrement, les surfaces principales respectives, intérieures à la cavité, des première et deuxième couches ont préférentiellement des courbures équivalentes, afin de maintenir un espacement (écart e) sensiblement constant dans la cavité 6 entre les première 5 et deuxième 4 couches. A cet effet, on peut admettre une tolérance sur les rayons de courbures des couches telle que la tolérance induite sur la flèche de la surface interne est sensiblement inférieure à l'écart e entre les couches. Par exemple, pour un rayon de courbure de la surface interne de l'ordre de 120mm , un diamètre de l'ordre de 60mm, et un écart e souhaité de l'ordre de 100µm, une tolérance de rayon de l'ordre de 1000µm peut être admise, de sorte que la tolérance sur la flèche est de l'ordre de 30µm, avec donc une variation d'écart e entre le bord du verre et son centre valant au maximum 30µm. On assure ainsi une homogénéité d'épaisseur e satisfaisante sur la surface de la cellule.

Avec de telles dispositions, les courbures internes des deux coques 4 et 5 sont similaires et assurent ainsi une homogénéité de la transmission sur toute la surface de la cellule 6 en garantissant alors une protection contre l'éblouissement sur tout le champ visuel. En effet, l'épaisseur de solution électrochrome 7 dans la cavité est sensiblement constante en tout point de la surface principale de la cellule et il en est donc ainsi des propriétés de transmission de la cellule.

En particulier, de telles cellules doivent permettre de proposer au porteur à la fois une protection optimale contre l'éblouissement à l'état actif (teinte avec filtrage actif en transmission), tout en autorisant une visibilité optimale quand le flux lumineux est faible (à l'état clair avec un filtrage en transmission inactif).

En référence à la figure 5, par les dispositions énoncées précédemment, une cellule au sens de l'invention atteint une transmission maximale à l'état clair supérieure ou égale à 88% dans le spectre visible Tv (en au moins un point de la cellule), ce qui permet d'assurer au porteur une vision confortable quand le verre est à l'état clair. On sélectionne à cet effet :
- des molécules électrochromes transparentes à l'état désactivé (décrites par exemple dans les documents EP2848669, EP2848667, EP2848668, EP2848670, et de numéro de dépôt EP15306123.9) : la solution présente une transmission à l'état désactivé comprise entre 81% et 99,5%, préférentiellement entre 95% et 99%,
- un dépôt conducteur 9, 10 (ITO) présentant de la perte de transmission, atténuée : les pertes par absorption d'un tel dépôt sont avantageusement comprises entre 0,5 et 5%, et en pratique inférieures à 1%. Par ailleurs, l'ITO présente une faible résistance par carré (inférieure à 10 ohms typiquement).

Il convient de noter que des pertes de transmission peuvent être aussi liées à la différence d'indice entre les couches 4, 5 et la solution 7. Cet aspect aussi est pris en considération.

Par ailleurs, les couches (coques constituées de verre préférentiellement transparent) peuvent être revêtues chacune (ou l'une d'elles seulement) par une ou plusieurs couches optiquement actives. Par exemple, une couche antireflet 17 peut être déposée sur la coque 5 par exemple sur sa face avant externe 5b comme illustré sur la figure 2B, pour augmenter la transmission. Une autre couche antireflet (non représentée) peut être déposée sur la face arrière de la deuxième coque 4 (en face arrière). Ainsi, les pertes par réflexion dues notamment à l'ITO peuvent être compensées grâce à ce dépôt antireflet 17, préférentiellement achromatique, sur la face externe d'une couche ou des deux couches.

A l'état foncé, il peut être appliqué, avec les dispositions énoncées plus haut, une transmission comprise entre 1% et 20%, plus particulièrement entre 3 et 18%. Bien entendu, des niveaux de transmission intermédiaires peuvent être prévus, et notamment, il est possible de prévoir une variation de transmission qui est continue depuis l'état clair précité, jusqu'à l'état foncé précité, et réciproquement. Par ailleurs, afin de permettre au porteur une vision optimale des couleurs relativement à la transmission à l'état foncé, il est proposé d'utiliser une formulation d'au moins deux molécules électrochromes dans la solution 7 dont les caractéristiques sont les suivantes :
- les potentiels d'oxydo-réduction des différentes molécules sont très proches (avec une différence de tension inférieure ou égale à 0,1V (préférentiellement 0,05V) entre deux oxydants, ou entre deux réducteurs de la solution) de manière à éviter un effet de coloration inhomogène (effet « caméléon »). En effet, si le spectre de transmission change en fonction de la tension (et donc de la transmission), la perception des couleurs par le porteur est modifiée de façon dynamique, et l'adaptation chromatique n'est pas immédiate (avec un décalage de quelques minutes) ;
- la formulation de la solution 7 est choisie de manière à préserver une vision naturelle. Par exemple, la formulation est choisie de manière à ce que la transmission de la cellule se rapproche au plus près de la transmission d'un verre teinté naturel ;
- la cellule possède préférentiellement dans le joint de scellement une ouverture sur la tranche qui permet de remplir la cavité avec une solution électrochrome quelconque, ce qui permet d'adapter la solution 7 à des compositions adaptées aux derniers souhaits du porteur.

Concernant les performances électriques de la cellule, certaines dispositions sont prises en outre. Selon l'invention, chaque élément de connexion 14, 15 de la cellule se présente sous la forme d'un « bus », par exemple en métal, d'épaisseur inférieure à 5µm (hauteur dans le sens de la figure 4), et préférentiellement comprise entre 1 et 2 microns (µm) et de largeur inférieure à 1000µm, préférentiellement inférieure à 750 µm. Avantageusement, un tel bus présente une résistance dans sa plus grande longueur inférieure à 7 ohms, préférentiellement à 3 ohms. Il permet en outre d'éviter une chute de tension supérieure à 10 mV. Le métal dans lequel est réalisé le bus peut être du cuivre passivé à l'or, ou en or seul, ou en cuivre seul, ou en argent, ou en tout autre métal conducteur.

Afin d'assurer le fonctionnement électrique de la cellule 3, chaque élément de connexion 14, 15 est relié électriquement à un circuit de commande 16. Le circuit de commande 16 est par exemple une carte électronique miniaturisée de pilotage équipée d'un microcontrôleur qui permet de piloter l'activation du filtrage en transmission, ou sa désactivation, ou encore un niveau de transmission de la cellule 3.

Selon une réalisation représentée à titre d'exemple sur la figure 4, le circuit de commande 16 est disposé de sorte à être en contact électrique avec les deux éléments de connexion 14, 15. Le circuit de commande 16 comprend à cet effet deux faces 16a, 16b, chacune des faces 16a, 16b étant reliée électriquement, notamment en contact direct, avec un élément de connexion 14, 15. Bien entendu, l'une et/ou l'autre des couches transparentes 4, 5 peut porter en outre une couche optiquement fonctionnelle telle qu'une couche antireflet 17 comme présenté plus haut, mais en variante ou en complément aussi une couche polarisante, une couche anti-salissante (« antifouling top coat »), une couche photochromique, un revêtement de protection (« hard coat layer », contre l'abrasion notamment, ou contre une rayure ou un impact), une couche anti-brouillard, ou autres. En particulier, il peut être avantageux de prévoir une couche teintée ou interférentielle ou autre.

Dans un exemple non limitatif, cette couche est capable d'appliquer une filtration dans le bleu, dans les longueurs d'onde 430nm à 465nm, pour le confort et la santé visuelle du porteur. De telles couches peuvent avoir donc des propriétés optiques et/ou mécaniques dans le dispositif ophtalmique de l'invention.

Le dispositif ophtalmique comporte au moins un insert transparent (partie hachurée et portant la référence 18 de la figure 3B), accolé à une couche transparente de la cellule (par exemple la couche de face arrière FAR) et ayant une puissance optique choisie pour respecter une prescription ophtalmique d'un porteur du dispositif. Cet insert 18 peut être complété ou être constitué de demi-pastilles pour former une fonction optique de double foyer, et présenter une forme générale ronde.

Comme indiqué ci-avant toutefois, dès lors que la première couche au moins 5, en face avant, présente une courbure non nulle, il est possible de choisir, au moins pour cette couche 5 (et/ou pour l'autre couche 4 en face arrière), un verre correcteur respectant une prescription du porteur. Ainsi, la cellule peut comporter au moins une couche transparente (4 et/ou 5), de courbure choisie pour conférer à la cellule une puissance optique respectant une prescription ophtalmique d'un porteur du dispositif ophtalmique de l'invention.

On propose ainsi, dans le cas d'un porteur ayant une prescription, une cellule électrochromique possédant une puissance optique égale à celle de la prescription.

Cette prescription peut être réalisée sur la cellule à fabriquer de différentes façons.

Dans une première réalisation, les couches ont des courbures choisies et sont initialement réalisées pour respecter la prescription du porteur.

Dans une deuxième réalisation, les couches sont initialement réalisées sans respecter de prescription, et on ajoute la correction optique pour respecter la prescription sur la couche arrière avec un insert 18 (ou « patch ») que l'on vient coller sur la face arrière, comme illustré sur la figure 3B. L'insert peut, en variante, se présenter sous la forme d'un « wafer », et occuper toute la surface principale de l'une des couches. Un tel wafer est alors maintenu par la monture (adaptée pour tenir le wafer et la cellule). Dans le cas d'un ajout de wafer, la courbure de face avant du wafer correspond à la courbure de la coque arrière 4 en face arrière. Les formes de la coque et du wafer sont préférentiellement identiques sur leurs surfaces principales respectives accolées. L'utilisation d'une cellule courbée permet en outre de coller un wafer pouvant supporter une prescription quelconque. Par exemple, pour une forte myopie, une courbure faible peut être utilisée, et on prévoit plutôt une courbure forte pour une forte hypermétropie. En alternative, on peut aussi prévoir de coller l'insert en face avant.

Bien entendu, les première et deuxième réalisations ci-dessus peuvent être complémentaires. Ainsi, il est possible de chercher à fabriquer une cellule respectant tout d'abord une courbure de monture en face avant. Ensuite, les couches transparentes sont fabriquées avec cette contrainte, et avec une contrainte supplémentaire liée à la prescription du porteur. On peut prévoir en dernier recours, dans le cas d'une difficulté pratique de réalisation de la cellule complète avec ces deux contraintes, d'ajouter en outre un insert pour respecter définitivement la prescription du porteur.

Ainsi, en termes plus génériques, on retiendra en première contrainte que, dans un dispositif ophtalmique 1 du type représenté sur la figure 1, et comportant donc une monture 2 présentant en particulier une courbure convexe en face avant, selon une caractéristique avantageuse proposée ici, les surfaces convexes en face avant des cellules 3a, 3b logées dans la monture, ont une courbure correspondant à la courbure de la monture 2.

En effet, avec une cellule ayant une couche transparente convexe en face avant (notamment pour éviter un flux lumineux sur les côtés), l'invention permet avantageusement d'assurer une correspondance entre la courbure (généralement convexe) de face avant d'une monture destinée à loger la cellule, d'une part, et la courbure de la couche convexe en face avant de la cellule, d'autre part.

Ainsi, la présente divulgation vise aussi un procédé de fabrication d'un dispositif ophtalmique comportant une cellule (par exemple électrochrome) comprenant au moins deux couches transparentes délimitant entre elles une cavité fermée (par exemple remplie par une solution électrochrome reliée à une unité de traitement pour commander une amplitude de la cellule), dans lequel :
- on reçoit au moins des données de forme d'une monture destinée à loger ladite cellule,
- on détermine, au moins en fonction desdites données de forme de monture, des paramètres de fabrication de la cellule, et
- on fabrique ladite cellule en fonction desdits paramètres.

Le procédé selon cette forme de réalisation est particulièrement avantageux, notamment en tant que tel, et peut, le cas échéant, faire l'objet d'une protection séparée.

Dans une réalisation possible d'un tel procédé, les données de forme de monture incluent au moins des données de surface de logement du dispositif ophtalmique dans la monture.

En complément ou en variante, les données de forme de monture incluent au moins des données de courbure d'un logement du dispositif ophtalmique dans la monture.

Dans cette réalisation, on peut déterminer, en fonction desdites données de forme de courbure de la monture, des paramètres de courbure correspondante de l'une au moins des couches transparentes.

Le procédé peut comporter des étapes dans lesquelles :
a) on reçoit, outre les données de forme de monture, des données de prescription ophtalmique d'un porteur du dispositif ophtalmique,
b) on détermine, en fonction desdites données de forme de monture, d'une part, et des données de prescription ophtalmique d'autre part, des données de courbure de l'une au moins des couches transparentes, et
c) on sélectionne des couches transparentes respectant, avec la composition électrochrome de la cavité, la prescription ophtalmique du porteur, l'une des couches au moins ayant les données de courbure déterminées à l'étape b).

Dans cette réalisation, on peut accoler un insert transparent ayant une puissance optique choisie, à l'une au moins des couches transparentes, pour respecter la prescription ophtalmique du porteur.

Dans une réalisation, on peut déterminer, en outre parmi les paramètres de la cellule, au moins une composition de solution électrochrome, pour contrôler une vitesse de transition de phase de la solution électrochrome sur la surface de la cellule, et de là, une homogénéité de teinte sur la surface de la cellule.

Dans une réalisation, les données de forme de monture incluent au moins des données de forme de drageoir de la monture, et on peut déterminer alors, en fonction desdites données de forme de drageoir, des paramètres de géométrie du contour de la cellule, qui permettent un emboitement correct de la cellule dans le drageoir de la monture. Par exemple, la cellule peut posséder un joint de scellement ayant une forme de biseau apte à épouser la forme de drageoir de la monture.

Dans une forme de réalisation, outre les données de forme de monture, on reçoit des données souhaitées parmi au moins des données :
- de valeurs d'amplitudes de la cellule,
- de vitesse de variation d'amplitude de la cellule,
- d'autonomie de batterie,
- de teinte de la cellule,
- d'homogénéité de teinte,
- et on détermine, au moins en fonction desdites données de forme de monture et desdites données souhaitées, des paramètres de la cellule en vue de la fabrication du dispositif ophtalmique.

Dans une forme de réalisation :
- on détermine, au moins en fonction desdites données de forme de monture, des paramètres de la cellule parmi au moins :
   * un type de batterie en réponse à une consommation électrique de ladite cellule, estimée en fonction desdites données de forme de monture,
   * des données de forme des couches transparentes,
   * des données de courbure de l'une au moins des couches transparentes,
   * des données de traitement de surface des couches transparentes,
   * une composition de solution électrochrome,
   * des données d'espacement entre les deux couches transparentes,
   * des données de paramétrage de l'unité de traitement pour commander une amplification prédéterminée de la cellule,
   * un type d'unité de traitement et de connectique pour une liaison à la solution électrochrome en réponse à un encombrement prévu de l'unité de traitement et de la connectique dans la cellule, et
- on applique lesdits paramètres de la cellule pour la fabrication du dispositif ophtalmique.

Dans une forme de réalisation possible, une unité de calcul incluant au moins un processeur détermine lesdits paramètres de la cellule en fonction au moins desdites données de forme de monture. Dès lors, la présente invention vise aussi un programme informatique comportant des instructions pour la mise en œuvre du procédé ci-avant, lorsque ce programme est exécuté par un processeur (notamment un processeur de l'unité de calcul précité).

La présente divulgation vise donc aussi un dispositif de traitement de données, comportant une unité de calcul du type précité, et incluant au moins un processeur pour déterminer lesdits paramètres de la cellule en fonction au moins desdites données de forme de monture, pour la mise en œuvre du procédé ci-avant. Un tel dispositif peut comporter en outre une interface de communication pour recevoir au moins lesdites données de forme de monture via un réseau de communication, ainsi qu'une interface de sortie pour délivrer des consignes de commande d'une installation de fabrication de dispositif ophtalmique en fonction desdits paramètres de la cellule.

Ainsi, on propose en outre ci-avant un procédé de fabrication de cellule électrochromique et d'intégration dans une monture électrochrome permettant de répondre au mieux aux besoins du porteur en termes de performances, de confort visuel et d'esthétique.

On a illustré sur la figure 6 un exemple de système capable de mettre en œuvre ce procédé.

Un ordinateur connecté OS (tablette, smartphone, PC, ou autres) sur un site de commande (pour « Ordering Site ») obtient des données de monture DMT (et éventuellement des données de prescription du porteur DPR) et commande la réalisation du dispositif ophtalmique incluant une cellule électrochromique (ou une paire de cellules), en fonction des besoins du porteurs. Il peut s'agir d'un ordinateur de l'opticien, d'un fabricant de montures, d'un site en ligne de configuration de monture auquel accède directement l'utilisateur, notamment.

L'ordinateur OS peut envoyer alors via le réseau NET les caractéristiques de la cellule souhaitées, au moins une parmi la liste suivante :
- une forme de verre pour la cellule (par exemple une forme 2D par fichiers de points par exemple, cette forme correspondant avec la forme de la monture destinée à intégrer la cellule),
- la courbure (en dioptrie par exemple) des verres (ces points sont transférables via un fichier 3D), la forme de verre et la courbure étant alors adaptées aux données de monture destinée à accueillir la cellule,
- les caractéristiques de transmission souhaitées (plages de valeurs de transmission respectivement à l'état clair et à l'état foncé, par exemple),
- la teinte de la cellule : il peut s'agit par exemple d'une référence de teinte prédéterminée par un jeu fini de teintes proposées. Il peut s'agir aussi d'une teinte parmi un ensemble de teintes réalisables par combinaison de molécules électrochromes proposées (selon une variation de teinte continue),
- la correction générale de la cellule en fonction de la prescription du porteur, et la position de points importants à cet effet (centre optique notamment),
- une vitesse de transition souhaitée entre l'état clair et l'état foncé et réciproquement,
- une autonomie d'alimentation souhaitée.

Un dispositif FI pour la mise en œuvre du procédé présenté ci-avant est équipé d'une interface de communication CI pour recevoir ces données via le réseau NET, ainsi que d'un circuit de traitement intégrant un processeur PROC et une mémoire MEM (de travail, et de stockage de données, notamment des instructions du programme informatique précité). Ce circuit de traitement est donc intégré à une unité de calcul pour estimer des paramètres de la cellule à fabriquer en fonction des données reçues via le réseau. Il comporte en outre une interface de sortie CO pour délivrer des consignes de commande d'une installation de fabrication LM de dispositif ophtalmique en fonction des paramètres estimés de la cellule.

Le dispositif FI peut donc être sur un site de conception de cellule électrochrome. L'installation de fabrication LM (pour « Lens Manufacturer ») réalise les cellules électrochromes et se situe sur un site de fabrication (qui peut être le même site ou un site différent de celui où se situe le dispositif FI).

Le dispositif FI calcule alors l'ensemble des paramètres de la cellule, permettant alors à l'installation LM de fabriquer cette cellule selon les étapes représentées sur la figure 7 :
- S1 : sélection des coques de verre ayant des rayons de courbure estimés en fonction notamment de la courbure de la monture et éventuellement de la prescription du porteur,
- S2 : traitement de surface des coques pour déposer une couche optiquement fonctionnelle (antireflet, filtrant le bleu et violet, à gradient, à teinte, ou autres), estimée par exemple en fonction des caractéristiques de transmission souhaitées,
- S3 : découpe des coques selon la forme 2D des logements de monture (y compris les données 3D de drageoir des logements de la monture pour usiner les bords de verre),
- S4 : traitement de surface pour le dépôt des revêtements électroconducteurs 9, 10, connexion d'un bus périphérique 14, 15 (par exemple en cuivre), de liaison à une carte fille de pilotage en amplitude et plus généralement de communication avec la cellule électrochromique, le choix du matériau des revêtements électroconducteurs 9, 10 (par exemple d'ITO) peut être conditionné par l'autonomie d'alimentation et/ou les caractéristiques de transmission souhaitées,
- S5 : scellement des deux coques et connectiques respectives en prévoyant en particulier un écart e entre les deux coques en fonction de la transmission souhaitée : un écart plus important implique une transmission plus faible, toute chose égale par ailleurs. Par ailleurs, l'écart e peut être déterminé aussi en fonction de la consommation souhaitée (un écart e plus important réduisant la consommation),
- S6 : détermination de la formulation de la solution 7 en fonction de la teinte de la cellule, de la valeur de transmission à l'état foncé, de la consommation et de la vitesse de transition souhaitées :
   - on détermine la proportion relative de chaque type de molécule électrochromique permettant d'obtenir la teinte (couleur) souhaitée,
   - on peut déterminer la concentration en fonction de la transmission maximale souhaitée (une concentration plus forte pour une transmission plus faible) ou en fonction de la consommation souhaitée (une concentration plus forte impliquant une consommation plus forte) ou en fonction de la vitesse de transition souhaitée,
   - on peut aussi déterminer le solvant en fonction de la transmission, consommation et/ou vitesse souhaitées : on peut choisir un solvant ralentissant la migration des espèces pour diminuer la transmission, ou réduire la consommation, ou réduire la vitesse de réponse.

La source d'alimentation 13 à prévoir est un paramètre important aussi à prendre en compte. En effet, la forme de la monture (de manière générale, pour sa surface et/ou sa courbure) influence notamment la surface de la cellule correspondante, et de là, l'alimentation nécessaire pour commander une variation d'amplitude sur l'ensemble de cette surface. En outre, la vitesse de transition de phase et son uniformité peuvent dépendre encore de l'alimentation fournie.
- S7 : après le remplissage de la cavité avec la formulation estimée et via une ouverture située dans la tranche de la cellule, accolement d'un insert (en cas de correction souhaitée selon les données de prescription DPR), par exemple un wafer ayant la forme permettant d'apporter une correction optique correspondant à la prescription du porteur et ayant un centre optique correctement positionné par rapport à la forme de la cellule, puis par couplage (par collage ou montage mécanique par les bords, ou couplage par un gel), on ajoute ce wafer en face arrière de la cellule ou en face avant,
- S8 : paramétrage de la carte fille de pilotage, avec :
   - le pilotage des fonctions de transmission/teinte/forme/vitesse de transition :
      * les tensions de pilotage compatibles avec la cellule peuvent être paramétrées (en tenant compte des différences de potentiel des oxydants et des réducteurs utilisés),
      * la vitesse de changement de tension peut être paramétrée pour accélérer/réduire la vitesse de transition,
   - le stockage des informations relatives au verre :
      * les informations relatives à la transmission/teinte/courbure/forme (fichier 3D par exemple)/surface du verre/correction/épaisseur de solution /viscosité /maximum et minimum de tension /connectique utilisée/caractéristiques physique des coques, de la batterie (ces données pouvant par exemple être lues par un intégrateur de la cellule pour identifier ses caractéristiques),
      * la carte fille peut être utilisée aussi pour stocker, une fois intégrée, des statistiques d'utilisation de la cellule.

La cellule électrochrome ainsi réalisée peut ensuite être envoyée à un site d'intégration de la cellule dans la monture et connecter la carte mère aux différentes cartes filles et éléments périphériques (un ou plusieurs capteurs de luminosité dans la monture pour commander l'état foncé ou clair, ou autres éléments).

## Revendications

1. Dispositif ophtalmique comprenant une cellule à variation d'amplitude pilotable électriquement, comprenant au moins une première couche transparente en face avant et une deuxième couche transparente en face arrière, la première couche ayant une surface principale convexe en face avant, le dispositif comportant au moins un insert transparent, accolé à une couche transparente de la cellule et ayant une puissance optique choisie pour respecter une prescription ophtalmique d'un porteur du dispositif,
chaque couche transparente étant recouverte par un revêtement conducteur (9, 10) s'étendant sur une surface principale de la couche transparente, interne dans la cellule,
le dispositif comprenant en outre un circuit de commande et ladite cellule étant reliée au circuit de commande via deux bus de connexion (14, 15), d'épaisseur inférieure à 5µm et de largeur inférieure à 1000µm,
chaque bus de connexion étant formé intégralement entre les deux couches transparentes, et les bus de connexion étant disposés en périphérie des revêtements conducteurs respectifs (9, 10),
le dispositif comportant en outre une monture comprenant au moins une ouverture logeant ladite cellule et présentant une courbure convexe en face avant correspondant à une courbure de face avant de la première couche transparente.

2. Dispositif selon la revendication précédente, **caractérisé en ce que** les première et deuxième couches délimitent entre elles une cavité fermée par un joint de scellement.

3. Dispositif selon la revendication 2, **caractérisé en ce que** la cavité est d'espacement constant, à 30% près, entre lesdites première et deuxième couches.

4. Dispositif selon l'une des revendications 2 et 3, **caractérisé en ce que** la cavité est fermée et remplie par une solution électrochrome, reliée à un circuit de traitement pour commander une amplitude optique de la cellule.

5. Dispositif selon l'une des revendications 2 à 4, **caractérisé en ce que** les revêtements conducteurs sont réalisés en oxyde d'indium dopé à l'étain (ITO).

6. Dispositif selon l'une des revendications précédentes, **caractérisé en ce que** la cellule est à variation de transmission pilotable électriquement, pour être, dans le spectre visible :
- supérieure à 80% et préférentiellement supérieure à 85%, dans un premier état, et
- inférieure à 30% et préférentiellement inférieure à 18% , dans un deuxième état.

7. Dispositif selon l'une des revendications précédentes, **caractérisé en ce que** la cellule comporte au moins une couche transparente de courbure choisie pour conférer à la cellule une puissance optique respectant une prescription ophtalmique d'un porteur du dispositif.

## Patentansprüche

1. Ophthalmische Vorrichtung, die eine Zelle mit elektrisch steuerbarer Amplitudenveränderung umfasst, die wenigstens eine erste lichtdurchlässige Schicht auf der vorderen Fläche und eine zweite lichtdurchlässige Schicht auf der hinteren Fläche enthält, wobei die erste Schicht auf der vorderen Fläche eine konvexe Hauptoberfläche besitzt, wobei die Vorrichtung wenigstens einen lichtdurchlässigen Einsatz umfasst, der auf eine lichtdurchlässige Schicht der Zelle geklebt ist und eine optische Brechungsleistung besitzt, die so gewählt ist, dass ein ophthalmisches Rezept eines Trägers der Vorrichtung berücksichtigt wird,
wobei jede lichtdurchlässige Schicht mit einem leitenden Überzug (9, 10) überzogen ist, der sich auf einer Hauptoberfläche der lichtdurchlässigen Schicht innerhalb der Zelle erstreckt,
wobei die Vorrichtung außerdem eine Steuerschaltung umfasst und die Zelle mit der Steuerschaltung über zwei Verbindungsbusse (14, 15) mit einer Dicke, die geringer als 5 µm ist, und einer Breite, die geringer als 1000 µm ist, verbunden ist,
wobei jeder Verbindungsbus zwischen den beiden lichtdurchlässigen Schichten einteilig ausgebildet ist und die Verbindungsbusse am Umfang der jeweiligen leitenden Überzüge (9, 10) angeordnet sind,
wobei die Vorrichtung außerdem ein Gestell umfasst, das wenigstens eine Öffnung aufweist, die die Zelle aufnimmt, und auf der vorderen Fläche eine konvexe Krümmung besitzt, die einer Krümmung der vorderen Fläche der ersten lichtdurchlässigen in Schicht entspricht.

2. Vorrichtung nach dem vorhergehenden Anspruch, **dadurch gekennzeichnet, dass** zwischen der ersten und der zweiten Schicht ein Hohlraum begrenzt wird, der durch eine Verschlussdichtung verschlossen ist.

3. Vorrichtung nach Anspruch 2, **dadurch gekennzeichnet, dass** der Hohlraum einen bis auf 30 % konstanten Abstand zwischen der ersten und der zweiten Schicht besitzt.

4. Vorrichtung nach einem der Ansprüche 2 und 3, **dadurch gekennzeichnet, dass** der Hohlraum verschlossen ist, mit einer elektrochromen Lösung gefüllt ist und mit einer Verarbeitungsschaltung verbunden ist, um eine optische Amplitude der Zelle zu steuern.

5. Vorrichtung nach einem der Ansprüche 2 bis 4, **dadurch gekennzeichnet, dass** die leitenden Überzüge aus Indiumoxid, das mit Zinn dotiert ist (ITO), hergestellt sind.

6. Vorrichtung nach einem der vorhergehenden Ansprüche, **dadurch gekennzeichnet, dass** die Zelle eine elektrisch steuerbare Durchlassänderung besitzt, derart, dass diese im sichtbaren Spektrum:
- in einem ersten Zustand größer als 80 % und vorzugsweise größer als 85 % ist und
- in einem zweiten Zustand kleiner als 30 % und vorzugsweise kleiner als 18 % ist.

7. Vorrichtung nach einem der vorhergehenden Ansprüche, **dadurch gekennzeichnet, dass** die Zelle wenigstens eine lichtdurchlässige Schicht mit einer gewählten Krümmung aufweist, die so gewählt ist, dass der Zelle eine optische Brechungsleistung verliehen wird, die ein ophthalmisches Rezept eines Trägers der Vorrichtung berücksichtigt.

## Claims

1. An ophthalmic device comprising a cell of electrically controllable variable amplitude, comprising at least a first transparent layer front-side and a second transparent layer back-side, the first layer having a convex main surface front-side, the device including at least one transparent insert, which is adhesively bonded to a transparent layer of the cell and which has an optical power chosen to respect an ophthalmic prescription of a wearer of the device,
each transparent layer being covered by a conductive coating (9, 10) that extends over a main surface of the transparent layer that is internal to the cell,
the device furthermore comprising a control circuit and said cell being connected to the control circuit via two connecting buses (14, 15) of thickness smaller than 5 µm and of width smaller than 1000 µm,
each connecting bus being integrally formed between the two transparent layers, and the connecting buses being placed on the periphery of the respective conductive coatings (9, 10),
the device furthermore including a frame comprising at least one aperture housing said cell and having a convex curvature front-side corresponding to a front-side curvature of the first transparent layer.

2. Device according to the preceding claim, **characterized in that** the first and second layers define therebetween a cavity closed by a seal.

3. Device according to Claim 2, **characterized in that** the cavity is, to within 30%, of constant spacing between said first and second layers.

4. Device according to one of Claims 2 and 3, **characterized in that** the cavity is closed and filled with an electrochromic solution, which is connected to a processing circuit for setting an optical amplitude of the cell.

5. Device according to one of Claims 2 to 4, **characterized in that** the conductive coatings are made of indium tin oxide (ITO).

6. Device according to one of the preceding claims, **characterized in that** the cell is of electrically controllable variable transmission in order to be, in the visible spectrum:
- higher than 80% and preferably higher than 85%, in a first state, and
- lower than 30% and preferably lower than 18%, in a second state.

7. Device according to one of the preceding claims, **characterized in that** the cell includes at least one transparent layer of curvature chosen to endow the cell with an optical power respecting an ophthalmic prescription of a wearer of the device.
